# EUROPÄISCHE PATENTSCHRIFT

(11) **EP 3 457 558 B1**
(45) Veröffentlichungstag und Bekanntmachung des Hinweises auf die Patenterteilung: **17.11.2021**
(21) Anmeldenummer: 17191295.9
(22) Anmeldetag: 15.09.2017
(51) Int. Cl.: H02P 25/06

(54) **IDENTIFIKATION EINES SEKUNDÄRTEILS BEIM EINSATZ IN EINEM LINEARMOTORBASIERTEN SYSTEM**
IDENTIFICATION OF A SECONDARY PART WHEN USED IN A LINEAR MOTOR BASED SYSTEM
IDENTIFICATION D'UNE PARTIE SECONDAIRE LORS DE L'UTILISATION DANS UN SYSTÈME BASÉ SUR UN MOTEUR LINÉAIRE

(43) Veröffentlichungstag der Anmeldung: 20.03.2019
(73) Patentinhaber: Siemens Aktiengesellschaft, 80333 München (DE)
(72) Erfinder: Hamm, Carsten, 91330 Eggolsheim (DE); Spindler, Carsten, 07368 Remptendorf (DE); Wedel, Bernd, 91096 Möhrendorf (DE)

(56) Entgegenhaltungen:
- EP-A1- 2 351 202
- EP-A1- 2 538 547
- WO-A1-2016/005790
- DE-A1-102009 041 483

## Beschreibung

Die Erfindung betrifft ein Verfahren zur Identifikation eines Sekundärteils beim Einsatz in einem linearmotorbasierten System sowie ein linearmotorbasiertes System.

Linearmotorbasierte Systeme werden im industriellen Umfeld eingesetzt, um beispielsweise Sekundärteile, welche auf einem Transportsystem beweglich angebracht sind, mithilfe von Linearmotortechnik gesteuert oder geregelt zu verfahren. Die Sekundärteile, manchmal auch Läufer genannt, können beispielsweise Komponenten oder Stückgut befördern, beispielsweise zwischen Verarbeitungsstationen in einer Fertigungsanlage oder innerhalb einer Verarbeitungsstation. Auch Werkzeugmaschinen oder sonstige Maschinen können als Antrieb Linearmotoren verwenden und dafür Sekundärteile aufweisen. Sekundärteile können ferner als Werkstückträger verwendet werden oder mit Werkstückträgern koppelbar sein, die Werkstücke in einer Anlage transportieren. Dabei werden die Sekundärteile beispielsweise als sogenannte Carrier entlang eines Primärteils mithilfe von im Primärteil vorgesehenen Primärteilspulen hochpräzise bewegt. Es sind aus dem Stand der Technik sogenannte Multi-Carrier-Systeme, kurz MCS, bekannt, bei welchen mehrere Sekundärteile oder Carrier auf einem Langstator vorgesehen sind und unabhängig voneinander über eine entsprechende Ansteuerung der Primärteilspulen verfahren werden können.

Auf solchen beschriebenen linearmotorbasierten Systemen, wie beispielsweise Multi-Carrier-Systemen, werden oftmals unterschiedliche Sekundärteile oder Carrier eingesetzt, beispielsweise um unterschiedliche Produkte bearbeiten zu können oder um individuelle Bewegungsabläufe vollziehen zu können. Ein Mischbetrieb von unterschiedlichen Sekundärteilen oder Carriern ist daher äußerst wünschenswert.

Es ist bekannt, Carrier oder Werkstückträger in einer Beförderungsanlage mit RFID-Transpondern zu versehen. In der Anlage sind dann an bestimmten vorgegebenen Positionen RFID-Lesegeräte installiert, in deren Nähe sich ein zu identifizierender Carrier aufhalten muss, damit seine ID ausgelesen werden kann und er so von dem Lesegerät erkannt wird.

Aus der europäischen Patentanmeldung EP2538547A1 ist ein Verfahren zur geberlosen Identifikation mechanischer Kenngrößen, insbesondere der Masse m, eines Linear-Asynchronmotors bekannt, wobei eine Testsignaleinspeisung in den Asynchronmotor derart erfolgt, dass das Sekundärteil aufgrund der Testsignaleinspeisung Auslenkungsbewegungen ausführen kann.

Vor diesem Hintergrund besteht die Aufgabe der vorliegenden Erfindung darin, ein vereinfachtes und flexibleres Verfahren zum Identifizieren von Sekundärteilen in linearmotorbasierten Systemen bereitzustellen. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zur Identifikation eines Sekundärteils beim Einsatz in einem linearmotorbasierten System, definiert durch die Merkmale des unabhängigen Anspruchs 1. Unter einem Primärteil werden in der vorliegenden Anmeldung ein Aktivteil bzw. mehrere Aktivteile eines linearmotorbasierten Antriebssystems verstanden. Es kann sich um einen Langstator handeln, entlang dessen Sekundärteile bewegt werden und der selbst feststehend verbaut ist. Durch ein individuelles Bestromen der Primärteilspulen, welche im Primärteil vorgesehen sind, wird entlang des Primärteils ein magnetisches Wanderfeld erzeugt, das Primärteilmagnetfeld, welches eine Bewegung von Sekundärteilen entlang des Primärteils bewirkt. Ein Sekundärteil weißt dazu ein magnetisches Aktivteil auf, beispielsweise einen Permanentmagneten, welcher durch das magnetische Wanderfeld des Primärteils eine Vorschubkraft erfährt. Das durch das magnetische Aktivteil gebildete Sekundärteilmagnetfeld wechselwirkt dabei mit dem Primärteilmagnetfeld, sodass eine Vorschubkraft entsteht, welche den Vorschub des Sekundärteils bewirkt, beispielsweise in horizontaler Richtung entlang eines horizontal befestigten Langstators.

Unter einem linearmotorbasierten System wird in der vorliegenden Anmeldung ein Antriebssystem verstanden, bei welchem Linearmotor-Technik zum Antrieb genutzt wird. Beispielsweise werden darunter Linearmotoren verstanden, welche zumindest abschnittsweise gerade verlaufen oder angeordnet sind. Ebenso können darunter auch gebogene oder gekrümmte Segmente oder Abschnitte, insbesondere zum Kreis geschlossene Primärteilanordnungen, verstanden werden, oder Mischformen aus geraden Linearmotor-Abschnitten und gebogenen Linearmotor-Abschnitten. Das linearmotorbasierte System ist beispielsweise ein Fördersystem. Unter dem Antriebsstrom wird derjenige Strom verstanden, mit dem die Primärteilspulen zur Erzeugung des Wandermagnetfeldes bestromt werden und der beispielsweise für die Bewegung der Carrier entlang des Stators verantwortlich ist. Es kann sich um einen Linearantrieb mit Einzelspultechnik mit entsprechendem Primärteil handeln oder um einen Drei-Phasenstrom basierten Antrieb mit aneinandergereihten Segmenten.

Bei einem sogenannten Multi-Carrier-System werden die Primärteilspulen eines Langstators mit Antriebsströmen derart belegt, dass mehrere Carrier unabhängig voneinander entlang des Langstators bewegt werden können.

Ein Primärteil umfasst beispielsweise eine Vielzahl von Spulen, insbesondere bei dreiphasiger Bestromung ganzzahlige Vielfache von drei. Beispielsweise ist das Primärteil aus mehreren Segmenten aufgebaut, die jeweils Spulen aufweisen.

An einem Sekundärteil oder an mindestens einem Sekundärteil im Falle mehrerer Sekundärteile ist jeweils mindestens eine Sekundärteilwicklung vorgesehen. Die Sekundärteilwicklung ist vorteilhafterweise einphasig ausgestaltet. Die Sekundärteilwicklung ist vorteilhafterweise räumlich nahe an den Permanentmagneten des Sekundärteils angebracht, beispielsweise um einen Pol eines Magneten herum. Die Sekundärteilwicklung bewegt sich demnach gemeinsam mit dem Sekundärteil entlang des Primärteils. Sie ist vorgesehen zum Induzieren eines Sekundärstroms in einer Testsignalfrequenz, welche für die Bestromung der Primärteilspulen verwendet wird. Unter einem Primärstrom wird in der vorliegenden Anmeldung ein zusätzlicher, für die Identifizierung eines Sekundärteils notwendiger Stromanteil verstanden. Es könnte statt des Begriffes Primärstrom auch der Begriff Identifizierungsstrom verwendet werden.

Das bekannte Phänomen der Induktion eines Sekundärstromes ist in der Sekundärteilwicklung zu beobachten, sobald ein Primärstrom in einer räumlich nahegelegenen Spule ein veränderliches Magnetfeld in Richtung der Sekundärteilwicklungsachse bewirkt. Die Richtung der Sekundärteilwicklung und die Richtung, in der die Bestromung mit der Testsignalfrequenz erfolgt, sind aufeinander abgestimmt, um einen Strom induzieren zu können. Die Wicklungsrichtung des Sekundärteils ist dafür definiert und insbesondere bekannt.

Zur Identifikation eines Sekundärteils wird vorgeschlagen, eine charakteristische Eigenschaft der Sekundärteilwicklung oder eines Schaltkreises, in welchen die Sekundärteilwicklung integriert ist, auszuwerten. Dafür wird die Stromantwort der ausgewählten Primärteilspulen gemessen. Die Stromantwort oder Stromantworten werden durch den Sekundärstrom beeinflusst.

Auf diese Weise fungiert das Primärteil als Lesegerät, welches eine charakteristische Eigenschaft des Sekundärteils als Identifizierungsinformation ausliest. Die Identifizierungsinformation oder ID kann auf dem Sekundärteil auf unterschiedlicher Weise integriert sein. Ein Auslesen dieser Identifizierungsinformation ist während des regulären Betriebs des linearmotorbasierten Systems möglich, beispielsweise während einer Bewegung des Sekundärteils. Ebenso kann die Identifizierung während des Betriebs erfolgen, wenn das Sekundärteil steht. Die Identifikation erfolgt somit besonders ohne zusätzlich Zeit zu benötigen, d.h. integriert in den eigentlichen Linearmotorbetrieb und parallel dazu und hinsichtlich des hardwaremäßigen Aufwands auch besonders effizient.

Gemäß einer Ausgestaltung wird die charakteristische Eigenschaft durch eine Induktivität oder ein Sättigungsverhalten der Sekundärteilwicklung gebildet. In dieser Variante ist die Sekundärteilwicklung selbst bzw. deren Induktivität die charakteristische Eigenschaft. Eine Gesamtinduktivität des Systems aus Primärteil und Sekundärteil wird durch die Einzelinduktivitäten des Primärteils und des Sekundärteils sowie einen Koppelfaktor gebildet. Bei bekannter Primärteilinduktivität und bekanntem Koppelfaktor kann so auf die Induktivität des Sekundärteils geschlossen werden, wenn aus der Messung der Amplitude der Stromantwort die Gesamtinduktivität berechnet wird. Je zu identifizierendem Sekundärteil muss in dieser Variante also eine unterschiedliche und sich auch bei Messungenauigkeiten voneinander unterscheidende Induktivität vorgesehen werden.

Gemäß einer Ausgestaltung wird die charakteristische Eigenschaft durch eine Resonanzfrequenz eines die Sekundärteilwicklung aufweisenden Saugkreises gebildet. In dieser Variante ist die Frequenz des Resonanzkreises die entscheidende charakteristische Größe eines jeweiligen Sekundärteiles und unterschiedliche verwendete und zu identifizierende Sekundärteile in einem linearmotorbasierten System sind entsprechend mit Saugkreisen unterschiedlicher Resonanzfrequenz auszustatten.

Gemäß einer Ausgestaltung wird die charakteristische Eigenschaft durch eine Sequenz eines mit Hilfe des Sekundärstromes ermöglichten Kurzschlusses im Schaltkreis oder einer ermöglichten Lastmodulation im Schaltkreis gebildet. Mithilfe des Sekundärstromes wird in dieser Variante auf dem Sekundärteil die benötigte Energie bereitgestellt, die für eine Datenübertragung vom Sekundärteil zum Primärteil benötigt wird. Es kommt beispielsweise ein RFID-basiertes, kurz für Radio Frequency Identification, Verfahren zum Einsatz. Dabei ist das Sekundärteil ein passiver RFID-Tag, welcher als charakteristische Eigenschaft eine Identifizierungsinformation oder ID eingespeichert hat. Die charakteristische Eigenschaft ist somit in dieser Variante im Schaltkreis gespeichert oder enthalten und die Ermittlung der charakteristischen Eigenschaft anhand der Stromantwort wird beispielsweise durch den induzierten Sekundärstrom, die dadurch bewirkte Energiebereitstellung und die Auswirkung von einer in Abhängigkeit von der Identifizierungsinformation durch den Schaltkreis erfolgenden Übertragung von digitalen Signalen auf die Induktivität der Primärteilspulen ermöglicht. Auf diese Weise wird ein identifizierendes Bitmuster übermittelt.

Beispielsweise erfolgt eine Datenübertragung in Richtung vom Sekundärteil als RFID-Tag oder RFID-Empfangsgerät hin zum Primärteil als RFID-Lesegerät durch einen Kurzschluss mittels eines Schalters im Takt der zu übertragenden Daten, in diesem Fall im Takt der Identifizierungsinformationen. Da die Spulen von Sekundärteil und Primärteil wie ein Transformator gekoppelt sind, bewirkt dies eine Amplitudenmodulation des Signals in der Sendespule. Das durch das Schalten des Schalters erzeugte digitale Signal enthält also die kennzeichnende Information, die zur Identifizierung des Sekundärteils dient. Das Sekundärteil dient als RFID-Datenträger und kann auch als Transponder bezeichnet werden. Ein RFID-Transponder besteht aus einem Mikrochip. Dieser Chip ist beispielsweise mit einer Spule versehen, die mit dem entsprechenden als Lesegerät fungierenden Primärteil kommuniziert. In einer anderen Variante werden die Identifizierungsdaten über ein elektronisches Kopplungsverfahren per Modulation ausgetauscht.

Gemäß einer Ausgestaltung zeigt die Stromantwort die charakteristische Eigenschaft anhand einer Amplitude, einer Signalform oder eines zeitlichen Verlaufs der Amplitude oder der Signalform an. Beispielsweise wird die Stromantwort permanent analysiert oder nur zu ausgewiesenen Zeitpunkten. Beispielsweise erfolgt ein Bestromen mit der oder den Testsignalfrequenzen nur dann, wenn ein Sekundärteil beispielsweise mittels eines Gebersystems oder auf sonstige Weise geortet wurde.

Gemäß einer Ausgestaltung wird eine Testsignalfrequenz konstant ausgegeben, beispielsweise mittels einer sinusförmigen oder rechteckförmigen Testspannung. Das Ausgeben der Testsignalfrequenz erfolgt insbesondere mithilfe eines Umrichters. Auch das Analysieren der Stromantwort wird vorteilhafterweise mithilfe der integrieren Stromsensoren des Umrichters durchgeführt und mithilfe des ebenfalls integrierten Signalprozessors analysiert.

Gemäß einer Ausgestaltung werden unterschiedliche Testsignalfrequenzen ausgegeben, um die Stromantwort in einem Suchverfahren zu analysieren. Dies ist insbesondere vorteilhaft für Verfahren, in welchen sich die charakteristische Eigenschaft erst im Vergleich der unterschiedlichen Stromantworten bei einem Bestromen mit unterschiedlichen Testsignalfrequenzen deutlich zeigt.

Es ist eine Wicklungsachse der Sekundärteilwicklung in einer durch das magnetische Aktivteil vorgegebenen d-Achse vorgesehen. Die Sekundärteilwicklung ist derart angeordnet, dass die Wicklung am durch die Permanentmagnete des Sekundärteils erzeugten Fluss teilnimmt. Die Permanentmagnete eines Sekundärteils bilden eine Hauptflussrichtung oder d-Richtung oder d-Achse aus, die durch die räumliche Anordnung des magnetischen Aktivteils im Sekundärteil vorgegeben ist. Die Sekundärteilwicklung ist derart angebracht, dass die die Hauptflussrichtung feldverstärkend oder feldschwächend eingesetzt werden kann. Es wird die Sekundärteilwicklung in d-Richtung angebracht und die Bestromung zur Identifizierung erfolgt ebenfalls - neben einer Antriebsbestromung in q-Richtung - in die vorgegebene d-Richtung, sodass eine Störung der Vorschubkraft minimiert wird. Ein Wechselmagnetfeld mit Anteilen in der durch die Permanentmagnete vorgegebenen Richtung beeinflusst die Vorschubbewegung aufgrund der Antriebsströme und der für die verschiebende Kraft benötigten Magnetfelder möglichst wenig.

Gemäß einer Ausgestaltung werden zur Identifikation die ausgewählten Primärteilspulen mit einem Primärstrom bestromt, der zu einem Wechselmagnetfeld mit Anteilen, insbesondere vollständig, in Richtung einer Wicklungsachse der Sekundärteilwicklung führt. Zumindest zu einem gewissen Anteil sollte das Bestromen zu einem Wechselmagnetfeld in Richtung der Wicklungsachse der Sekundärteilwicklung führen. Je besser die Richtungen des Wechselmagnetfeldes und der Sekundärteilwicklung überstimmen, desto besser kann der Sekundärstrom induziert werden.

Vorteilhafterweise erfolgt die Ansteuerung der Primärteilspulen über einen separaten Stromregler für die d-Richtung. Vorteilhafterweise wird somit der q-Anteil des Primärteilmagnetfeldes, möglichst wenig beeinflusst. Dadurch wird die Vorschubbewegung des Sekundärteils möglichst wenig beeinträchtigt. Die Antriebsströme und die Primärströme werden für eine Primärteilspule überlagert und gemeinsam angelegt. In einem besonders vorteilhaften Beispiel ist die Sekundärteilwicklung in d-Richtung ausgebildet und die Bestromung mit dem Primärstrom erfolgt ebenfalls vollständig in d-Richtung. Dies maximiert einerseits die Auswirkung des Sekundärstroms auf die Induktivitätsänderung der Primärteilspule und minimiert zugleich die Beeinflussung des Primärteilmagnetfeldes durch das Wechselmagnetfeld des Primärstroms.

Die Erfindung betrifft ferner ein linearmotorbasiertes System, definiert durch die Merkmale des unabhängigen Anspruchs 8. Gemäß einer Ausgestaltung ist der Schaltkreis ein Saugkreis. Beispielsweise weist er neben der Sekundärteilwicklung ferner einen Kondensator und einen Widerstand auf.

Gemäß einer Ausgestaltung ist der Schaltkreis in einen RFID-Transponder mit gespeicherter Identifizierungsinformation integriert. Beispielsweise handelt es sich um einen passiven RFID-Transponder, welcher durch den nach dem transformatorischen Prinzip in die Sekundärteilwicklung induzierten Sekundärstrom die für die Funktionsweise und insbesondere die Datenübermittlung benötigte Energie erhält.

Die Erfindung betrifft ferner ein Computerprogrammprodukt nach dem Anspruch 13.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung in Frage, wie zum Beispiel ein Mikroprozessor. Ferner kann das Computerprogramm auf dem Umrichter laufen. In dieser Variante kann der Antrieb auch ohne externe Steuerung den Carrier identifizieren und die ID z.B. als Parameter zur Verfügung stellen.
- Figur 1:: Es zeigen: Eine schematische Darstellung eines linearmotorbasierten Systems gemäß einer ersten Ausführungsform, welche nicht Teil der Erfindung ist.
- Figur 2:: Eine schematische Darstellung eines linearmotorbasierten Systems gemäß einem zweiten Ausführungsbeispiel der Erfindung.

In den Figuren sind funktionsgleiche Elemente mit denselben Bezugszeichen versehen, sofern nichts anderes angegeben ist.

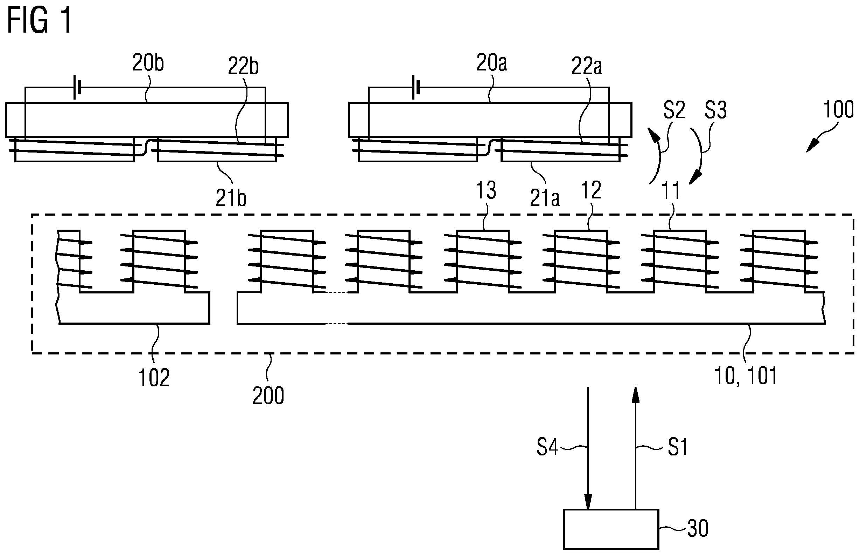

In Figur 1 ist ein linearmotorbasiertes System 100 schematisch abgebildet, wobei ein Langstator 200 vorgesehen ist, welcher mehrere Primärteile 10 aufweist, welche als Segmente 101, 102 ausgebildet sind. Beispielshalber sind zwei Sekundärteile 20a, 20b abgebildet, welche entlang des Langstators 200 mit Linearmotortechnik bewegt werden. Es kommt beispielsweise eine 3-Phasen-Drehstromtechnik zum Einsatz, bei welchem je Primärteil eine Anordnung aus Primärteilspulen 11, 12, 13 bestromt wird, wodurch die Vorwärtsbewegung der Sekundärteile 20a, 20b erreicht wird. Beispielsweise kann es sich um Carrier innerhalb eines Multicarriersystems handeln, welche hochpräzise mittels der Linearmotortechnik angesteuert und somit bewegt werden können. Vorteilhafterweise erfolgt die Bewegung der einzelnen Carrier unabhängig voneinander. Beispielsweise wird das linearmotorbasierte System 100 in einer Automatisierungsanlage eingesetzt, in welcher Carrier aus verschiedenen Anlagenabschnitten oder aus verschiedenen Bearbeitungsstationen für eine kurze Teilstrecke aufeinandertreffen und beispielsweise am Ende des linearmotorbasierten Abschnitts an unterschiedliche Stationen weitergegeben werden sollen oder vereinzelt werden sollen. Dabei sollen beispielsweise nur ganz bestimmte Carrier, welche als Sekundärteile 20a, 20b über dem Langstator 200 bewegt werden, an bestimmte vorgegebene Plätze oder Stationen weitergeleitet werden. Die Carrier sollen dafür identifizierbar sein. Jeder Carrier, welcher in einer solchen Anlage eingesetzt wird, wird dafür mit einer charakteristischen Eigenschaft versehen.

Im ersten Ausführungsbeispiel soll diese charakteristische Eigenschaft durch eine charakteristische Resonanzfrequenz eines Saugkreises vorgegeben werden, welcher auf dem Sekundärteil angebracht ist. Dazu weist jedes der Sekundärteile 20a, 20b eine Sekundärteilwicklung 22a, 22b um das jeweilige magnetische Aktivteil 21a, 21b auf. Die jeweilige Sekundärteilwicklung 22a, 22b ist dabei so angebracht, dass durch spezifisches Bestromen der Primärteilspulen 11, 12, 13 ein Sekundärstrom in der Wicklung induziert wird. Die jeweilige Sekundärteilwicklung 22a, 22b ist in einen Saugkreis integriert. Dazu ist beispielshalber in der Figur 1 ein Kondensator angedeutet. Jeder Saugkreis weist eine Resonanzfrequenz auf, bei welcher der induzierte Strom maximal absorbiert wird. Erfolgt ein Bestromen S1 mit der Steuereinheit 30, beispielsweise einem Umrichter, derart, dass ein Sekundärstrom in der Sekundärteilwicklung 22a induziert werden kann S2, und handelt es sich bei dem Strom um einen Strom in der Resonanzfrequenz des Saugkreises, so beeinflusst S3 der in der Sekundärteilwicklung 22a induzierte Strom die Stromantwort der Primärteilspulen 11, 12, 13. Diese Stromantwort der Primärteilspulen 11, 12, 13 wird mithilfe der Steuereinheit 30 gemessen S4. Am Verlauf der Stromantwort und insbesondere an der Abhängigkeit der Amplitude der Stromantwort von verschiedenen Frequenzen, welche für die Testsignalfrequenzen verwendet werden, kann somit auf die Resonanz des Saugkreises geschlossen werden. Ist je Carrier in der Anlage eine spezifische und charakteristische Resonanzfrequenz vorgesehen, so kann somit auf die Identität des gerade über den bestromten Primärteilspulen 11, 12, 13 befindlichen Carriers geschlossen werden. Die verschiedenen Sequenzen für das Testsignal werden somit eingesetzt, um ein Suchverfahren zu realisieren, welches die Resonanzfrequenz auffindet. Vorstellbar sind Verfahren wie Swept-Sine, White Noise und FFT, kurz für schnelle Fourier-Transformation, oder Pseudo-random binary signal - Verfahren mit diskreter Fourier-Transformation.

Die jeweilige Sekundärteilwicklung 22a, 22b wird im vorgestellten Ausführungsbeispiel auf den Widerstand und Kondensator des jeweiligen eigenen Saugkreises abgestimmt und die Resonanz so eingestellt, dass diese Resonanzfrequenzen mittels des Umrichters für den Primärstrom ausgegeben werden können.

In einer noch weniger aufwendigen Variante wird auf dem Carrier oder Sekundärteil eine Sekundärteilwicklung vorgesehen, welche eine bekannte Induktivität darstellt. Die charakteristische Eigenschaft des Sekundärteils 20a, 20b ist damit eine spezifische Induktivität, welche von Carrier zu Carrier in einer Automatisierungsanlage unterschiedlich ist. In dieser Variante ermittelt die Steuereinheit 30 oder der Umrichter über ein Testsignal den Wert der Induktivität und identifiziert so den Carrier. Dabei kommen bekannte Verfahren zur Messung einer Induktivität zum Einsatz. Die Amplitude des Stromes wird als Stromantwort analysiert und ist ein Maß für die Gesamtinduktivität, welche sich aus der Induktivität des Primärteils und der des Sekundärteils sowie einem Koppelfaktor zusammensetzt. Die Primärteilinduktivität und der Koppelfaktor sind bekannt, so dass die Induktivität des Sekundärteils ausgerechnet werden kann. Ferner ist es denkbar, das Sättigungsverhalten der Sekundärteilwicklung 22a, 22b auszuwerten und dafür die Signalform der Stromantwort zu untersuchen. Auch somit kann auf eine charakteristische Eigenschaft jedes einzelnen Carriers geschlossen werden.

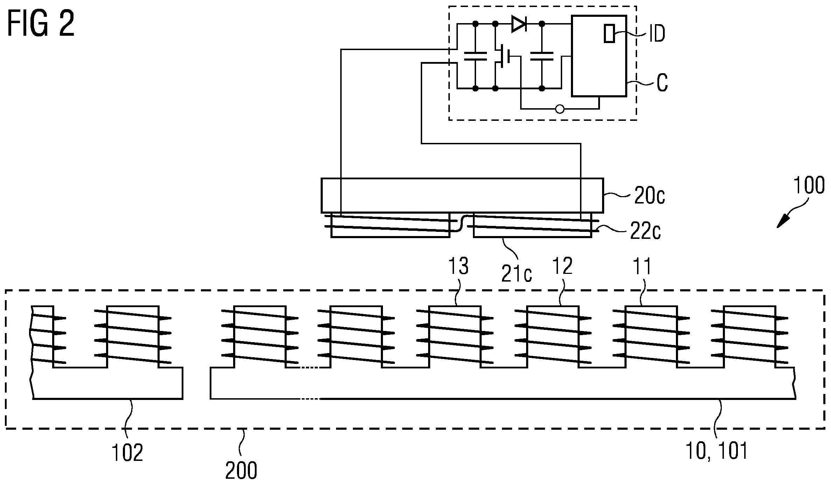

In der Figur 2 ist schematisch dargestellt, wie in einem zweiten Ausführungsbeispiel der Erfindung ein Sekundärteil 20c auf Basis von RFID-Technologie identifiziert wird. Das linearmotorbasierte System 100 weist wiederum einen Langstator 200 auf mit mehreren Primärteilen 10 als Segmente 101, 102. Das Sekundärteil 20c ist wiederum mit einem magnetischen Aktivteil 21c, beispielsweise mit Permanentmagneten, versehen, so dass sich das Sekundärteil 20c bei Anlegen einer Antriebsbestromung im Primärteilmagnetfeld derart auszurichten versucht, dass eine Vor- oder Rückwärtsbewegung des Sekundärteils 20c entlang des Lagenstators 200 erreicht wird.

Die Sekundärteilwicklung 22c ist ferner so auf dem Sekundärteil 20c angebracht, dass das Anlegen eines Primärstromes mit einer Testsignalfrequenz, welche in einer bestimmten Richtung ausgegeben wird, einen Sekundärstrom in der Sekundärteilwicklung 22c induziert. Dazu sind die Richtung der Sekundärteilwicklung 22c und die Richtung, in der die Bestromung mit der Testsignalfrequenz erfolgt, aufeinander abgestimmt. Auf besonders vorteilhafte Weise ist diese Richtung die d-Richtung oder d-Achse oder Hauptflussrichtung, welche durch die Anordnung der Permanentmagnete im Sekundärteil 20c vorgegeben wird. Dann ist der Einfluss auf die Vorwärtsbewegung, die durch die typischerweise in q-Richtung erfolgende Antriebsbestromung erzielt wird, möglichst ungestört.

Durch die Sekundärteilwicklung 22c und den darin induzierten Sekundärstrom erhält ein weiterhin auf dem Sekundärteil angebrachter Chip C nach dem Transformator-Prinzip Energie, welche er nutzt um einen Kurzschluss einer Antenne zu bewirken. Auf dem Chip C ist digital eine Identifizierungsinformation ID gespeichert. Diese Information ID beeinflusst eine Sequenz, mit der der Kurzschluss erfolgt und damit den Verlauf oder die zeitliche Änderung einer Induktivität des Sekundärteils. Diese Induktivitätsänderung wird wiederum als Reaktion in der Stromantwort der Primärteilspulen erkennbar.

In dieser besonders vorteilhaften Ausführungsform der Erfindung, in welcher auf dem Sekundärteil 20c ein Chip C vorgesehen ist, können auch komplexe Informationen zur Identifizierung eines einzelnen Sekundärteils 20c untergebracht werden.

Die Identifizierungsinformation ID kann beispielsweise um weitere Informationen ergänzt werden, beispielsweise zum vorgesehenen Transportweg innerhalb der Automatisierungsanlage oder zu Priorisierungsangaben.

In einer Erweiterung ist es denkbar, dass mit dem beschriebenen Prinzip auch Informationen auf das Sekundärteil geschrieben werden. Im beschriebenen Ausführungsbeispiel fungiert das Sekundärteil als passiver RFID-Tag oder -Transponder. Die Sekundärteilwicklung 20c ist dabei für die Energieübertragung zuständig.

Auf vorteilhafte Weise wird eine RFID-Lesefunktion mit dem vorgestellten Verfahren und linearmotorbasierten System in einen Umrichter integriert. Die Identifikation eines Sekundärteils mit RFID-Tag kann während des normalen Betriebs erfolgen, ohne dass das Sekundärteil für die Identifizierung an einer vorbestimmten Stelle positioniert werden muss. Es sind keine zusätzlichen Wartezeiten an Lesegeräten erforderlich und der Aufbau einer Beförderungsanlage oder Ähnlichem kann sehr viel flexibler gestaltet werden.

## Patentansprüche

1. Verfahren zur Identifikation eines Sekundärteils (20a, 20b,20c...) beim Einsatz in einem linearmotorbasierten System (100),
- wobei im linearmotorbasierten System (100) ein Primärteil (10, 101, 102) mit Primärteilspulen (11, 12, 13...) vorgesehen ist,
- wobei das Sekundärteil (20a, 20b,20c...) ein magnetisches Aktivteil (21a, 21b) zur Ausbildung eines Sekundärteilmagnetfeldes aufweist und die Primärteilspulen (11, 12, 13...) derart mit einem Antriebsstrom ansteuerbar sind, dass eine auf das Sekundärteil (20a, 20b,20c...) wirkende Vorschubkraft und eine Bewegung des Sekundärteils (20a, 20b,20c...) entlang des Primärteils (10, 101, 102) erreichbar ist,
wobei
- an dem Sekundärteil (20a, 20b,20c...) mindestens eine Sekundärteilwicklung (22a, 22b, 22c...) in einem Schaltkreis vorgesehen ist, wobei eine Wicklungsachse der Sekundärteilwicklung (22a, 22b, 22c...) in einer durch das magnetische Aktivteil (21a, 21b) vorgegebenen d-Achse vorgesehen ist,
- zur Identifikation des Läufers ausgewählte Primärteilspulen (11, 12, 13...) mit einem Primärstrom in einer oder mehreren Testsignalfrequenzen bestromt werden (S1) zum Induzieren (S2) eines Sekundärstromes in der Sekundärteilwicklung (22a, 22b, 22c...), **dadurch gekennzeichnet, dass** zur Identifikation die ausgewählten Primärteilspulen (11, 12, 13...) mit einem Primärstrom bestromt werden, der zu einem Wechsel-Magnetfeld in Richtung der Wicklungsachse der Sekundärteilwicklung (22a, 22b, 22c...) führt,
- eine charakteristische Eigenschaft der Sekundärteilwicklung (22a, 22b, 22c...) oder des Schaltkreises für das Sekundärteil (20a, 20b, 20c...) kennzeichnend ist,
- der Sekundärstrom eine Stromantwort der Primärteilspulen (11, 12, 13...) beeinflusst (S3) und die charakteristische Eigenschaft anhand der Stromantwort gemessen wird (S4).

2. Verfahren nach Anspruch 1, wobei die charakteristische Eigenschaft durch eine Induktivität oder ein Sättigungsverhalten der Sekundärteilwicklung (22a, 22b, 22c...) gebildet wird.

3. Verfahren nach Anspruch 1, wobei die charakteristische Eigenschaft durch eine Resonanzfrequenz eines die Sekundärteilwicklung (22a, 22b, 22c...) aufweisenden Saugkreises gebildet wird.

4. Verfahren nach Anspruch 1, wobei die charakteristische Eigenschaft durch eine Sequenz eines mit Hilfe des Sekundärstromes ermöglichten Kurzschlusses im Schaltkreis oder einer ermöglichten Lastmodulation im Schaltkreis gebildet wird.

5. Verfahren nach einem der vorstehenden Ansprüche, wobei die Stromantwort die charakteristische Eigenschaft anhand einer Amplitude, einer Signalform oder eines zeitlichen Verlaufs der Amplitude oder der Signalform anzeigt.

6. Verfahren nach einem der vorstehenden Ansprüche, wobei eine Testsignalfrequenz konstant ausgegeben wird, beispielsweise mittels einer sinusförmigen oder rechteckförmigen Testspannung.

7. Verfahren nach einem der vorstehenden Ansprüche, wobei unterschiedliche Testsignalfrequenzen ausgegeben werden, um die Stromantwort in einem Suchverfahren zu analysieren.

8. Linearmotorbasiertes System (100), aufweisend
- mindestens ein Primärteil (10, 101, 102) mit Primärteilspulen (11, 12, 13...),
- mindestens ein Sekundärteil (20a, 20b,20c...), das jeweilige Sekundärteil (20a, 20b, 20c...) aufweisend ein jeweiliges magnetisches Aktivteil (21a, 21b, 21c...) zur Ausbildung eines jeweiligen Sekundärteilmagnetfeldes, wobei die Primärteilspulen (11, 12, 13...) derart mit einem Antriebsstrom ansteuerbar sind, dass sich ein Primärteilmagnetfeld ausbildet, so dass eine Bewegung des mindestens einen Sekundärteils (20a, 20b, 20c...) entlang des mindestens einen Primärteils (10, 101, 102) erreichbar ist,
wobei eine jeweilige Sekundärteilwicklung (22a, 22b, 22c...) in einem Schaltkreis, wobei eine charakteristische Eigenschaft der Sekundärteilwicklung oder des Schaltkreises für das jeweilige Sekundärteil kennzeichnend ist, wobei eine Wicklungsachse der Sekundärteilwicklung (22a, 22b, 22c...) in einer durch das magnetische Aktivteil (21a, 21b) vorgegebenen d-Achse vorgesehen ist,
- eine Steuereinheit (30) zum Bestromen ausgewählter Primärteilspulen (11, 12, 13...) mit einem Primärstrom in einer oder mehreren Testsignalfrequenzen zum Induzieren eines Sekundärstromes in der Sekundärteilwicklung, und zum Messen der charakteristischen Eigenschaft anhand einer durch den Sekundärstrom beeinflussten Stromantwort der Primärteilspulen (11, 12, 13...), **dadurch gekennzeichnet, dass** zur Identifikation die ausgewählten Primärteilspulen (11, 12, 13...) mit einem Primärstrom bestromt werden, der zu einem Wechsel-Magnetfeld in Richtung der Wicklungsachse der Sekundärteilwicklung (22a, 22b, 22c...) führt.

9. Linearmotorbasiertes System (100) nach Anspruch 8, wobei der Schaltkreis ein Saugkreis ist.

10. Linearmotorbasiertes System (100) nach Anspruch 8, wobei der Schaltkreis in einen RFID-Transponder mit gespeicherter Identifizierungsinformation integriert ist.

11. Linearmotorbasiertes System (100) nach einem der Ansprüche 8 bis 10, wobei die Sekundärteilwicklung (22a, 22b) innerhalb des magnetischen Aktivteils (21a, 21b) eingebettet ist.

12. Linearmotorbasiertes System (100) nach einem der Ansprüche 8 bis 10, wobei die Sekundärteilwicklung (22a, 22b) räumlich, insbesondere seitlich, versetzt zum magnetischen Aktivteil (21a, 21b) vorgesehen ist.

13. Computerprogrammprodukt umfassende Befehle, die bewirken, dass das linearmotorbasierte System nach einem der Ansprüche 8 bis 12 die Verfahrensschritte nach einem der Ansprüche 1 bis 7 ausführt.

## Claims

1. Method for identifying a secondary part (20a, 20b, 20c ...) during use in a linear-motor-based system (100),
- wherein a primary part (10, 101, 102) having primary-part coils (11, 12, 13...) is provided in the linear-motor-based system (100),
- wherein the secondary part (20a, 20b, 20c ...) has a magnetic active part (21a, 21b) for forming a secondary-part magnetic field and the primary-part coils (11, 12, 13...) can be actuated using a drive current in such a way that an advancing force acting on the secondary part (20a, 20b, 20c ...) and a movement of the secondary part (20a, 20b, 20c ...) along the primary part (10, 101, 102) can be achieved,
wherein
- at least one secondary-part winding (22a, 22b, 22c...) in a circuit is provided on the secondary part (20a, 20b, 20c ...), wherein a winding axis of the secondary-part winding (22a, 22b, 22c...) is provided in a d-axis prescribed by the magnetic active part (21a, 21b),
- for the purpose of identifying the rotor, selected primary-part coils (11, 12, 13...) are energized (S1) using a primary current at one or more test signal frequencies in order to induce (S2) a secondary current in the secondary-part winding (22a, 22b, 22c...), **characterized in that**
for the purpose of identification, the selected primary-part coils (11, 12, 13...) are energized using a primary current, which leads to an alternating magnetic field in the direction of the winding axis of the secondary-part winding (22a, 22b, 22c...),
- a characteristic property of the secondary-part winding (22a, 22b, 22c...) or of the circuit is representative of the secondary part (20a, 20b, 20c...),
- the secondary current influences (S3) a current response of the primary-part coils (11, 12, 13...) and the characteristic property is measured (S4) using the current response.

2. Method according to Claim 1, wherein the characteristic property is formed by an inductance or a saturation behaviour of the secondary-part winding (22a, 22b, 22c...).

3. Method according to Claim 1, wherein the characteristic property is formed by a resonant frequency of a series resonant circuit having the secondary-part winding (22a, 22b, 22c...) .

4. Method according to Claim 1, wherein the characteristic property is formed by a sequence of a short in the circuit made possible with the aid of the secondary current or a load modulation made possible in the circuit.

5. Method according to one of the preceding claims, wherein the current response indicates the characteristic property using an amplitude, a signal shape or a time profile of the amplitude or the signal shape.

6. Method according to one of the preceding claims, wherein a test signal frequency is output constantly, for example by means of a sinusoidal or square-wave test voltage.

7. Method according to one of the preceding claims, wherein different test signal frequencies are output in order to analyse the current response in a search method.

8. Linear-motor-based system (100), having
- at least one primary part (10, 101, 102) having primary-part coils (11, 12, 13...),
- at least one secondary part (20a, 20b, 20c...), the respective secondary part (20a, 20b, 20c...)
having a respective magnetic active part (21a, 21b, 21c...) for forming a respective secondary-part magnetic field, wherein the primary-part coils (11, 12, 13...) can be actuated using a drive current in such a way that a primary-part magnetic field forms, with the result that a movement of the at least one secondary part (20a, 20b, 20c...) along the at least one primary part (10, 101, 102) can be achieved,
wherein
a respective secondary-part winding (22a, 22b, 22c...) in a circuit, wherein a characteristic property of the secondary-part winding or of the circuit is representative of the respective secondary part, wherein a winding axis of the secondary-part winding (22a, 22b, 22c...) is provided in a d-axis prescribed by the magnetic active part (21a, 21b),
- a control unit (30) for energizing selected primary-part coils (11, 12, 13...) using a primary current at one or more test signal frequencies in order to induce a secondary current in the secondary-part winding, and in order to measure the characteristic property using a current response of the primary-part coils (11, 12, 13...), said current response being influenced by the secondary current, **characterized in that** for the purpose of identification, the selected primary-part coils (11, 12, 13...) are energized using a primary current, which leads to an alternating magnetic field in the direction of the winding axis of the secondary-part winding (22a, 22b, 22c...) .

9. Linear-motor-based system (100) according to Claim 8, wherein the circuit is a series resonant circuit.

10. Linear-motor-based system (100) according to Claim 8, wherein the circuit is integrated into an RFID transponder comprising stored identification information.

11. Linear-motor-based system (100) according to one of Claims 8 to 10, wherein the secondary-part winding (22a, 22b) is embedded within the magnetic active part (21a, 21b).

12. Linear-motor-based system (100) according to one of Claims 8 to 10, wherein the secondary-part winding (22a, 22b) is provided in a spatially, in particular laterally, offset manner with respect to the magnetic active part (21a, 21b).

13. Computer program product comprising commands that have the effect that the linear-motor-based system according to one of Claims 8 to 12 executes the method steps according to one of Claims 1 to 7.

## Revendications

1. Procédé d'identification d'une partie secondaire (20a, 20b, 20c...) lors de l'utilisation dans un système basé sur un moteur linéaire (100),
- dans lequel une partie primaire (10, 101, 102) avec des bobines de partie primaire (11, 12, 13) est prévue dans le système basé sur un moteur linéaire (100),
- dans lequel la partie secondaire (20a, 20b, 20c...) présente une partie active magnétique (21a, 21b) pour former un champ magnétique de partie secondaire et les bobines de partie primaire (11, 12, 13) peuvent être commandées avec un courant d'entraînement de telle façon qu'une force d'avancement agissant sur la partie secondaire (20a, 20b, 20c...) et un mouvement de la partie secondaire (20a, 20b, 20c...) le long de la partie primaire (10, 101, 102) peuvent être obtenus,
- au moins un bobinage de partie secondaire (22a, 22b, 22c...) est prévu dans un circuit de branchement sur la partie secondaire (20a, 20b, 20c...), dans lequel un axe de bobinage du bobinage de partie secondaire (22a, 22b, 22c...) est prévu dans un axe d prédéfini par la partie active magnétique (21a, 21b),
- pour identifier l'induit, des bobines de partie primaire (11, 12, 13...) sélectionnées sont alimentées (S1) par un courant primaire dans une ou plusieurs fréquence(s) de signal test pour induire (S2) un courant secondaire dans le bobinage de partie secondaire (22a, 22b, 22c...), **caractérisé en ce que**
pour l'identification, les bobines de partie primaire (11, 12, 13...) sélectionnées sont alimentées par un courant primaire qui conduit à un champ magnétique alternatif en direction de l'axe de bobinage du bobinage de partie secondaire (22a, 22b, 22c...),
- une propriété caractéristique du bobinage de partie secondaire (22a, 22b, 22c...) ou du circuit de branchement est significative de la partie secondaire (20a, 20b, 20c...),
- le courant secondaire influe (S3) une réponse de courant des bobines de partie primaire (11, 12, 13) et la propriété caractéristique est mesurée (S4) à l'aide de la réponse de courant.

2. Procédé selon la revendication 1, dans lequel la propriété caractéristique est formée par une inductance ou un comportement de saturation du bobinage de partie secondaire (22a, 22b, 22c...) .

3. Procédé selon la revendication 1, dans lequel la propriété caractéristique est formée par une fréquence de résonance d'un circuit d'absorption présentant le bobinage de partie secondaire (22a, 22b, 22c...) .

4. Procédé selon la revendication 1, dans lequel la propriété caractéristique est formée par une séquence d'un court-circuit dans le circuit de branchement rendu possible à l'aide du courant secondaire ou d'une modulation de charge rendue possible dans le circuit de branchement.

5. Procédé selon l'une des revendications précédentes, dans lequel la réponse de courant indique la propriété caractéristique à l'aide d'une amplitude, d'une forme de signal ou d'un tracé temporel de l'amplitude ou de la forme de signal.

6. Procédé selon l'une des revendications précédentes, dans lequel une fréquence de signal test est émise de façon constante, par exemple au moyen d'une tension test sinusoïdale ou rectangulaire.

7. Procédé selon l'une des revendications précédentes, dans lequel différentes fréquences de signal test sont émises pour analyser la réponse de courant dans un procédé de recherche.

8. Système basé sur un moteur linéaire (100), présentant
- au moins une partie primaire (10, 101, 102) avec des bobines de partie primaire (11, 12, 13),
- au moins une partie secondaire (20a, 20b, 20c...), la partie secondaire (20a, 20b, 20c...) respective présentant une partie active magnétique (21a, 21b, 21c...) respective pour former un champ magnétique de partie secondaire respectif, dans lequel les bobines de partie primaire (11, 12, 13) peuvent être commandées avec un courant d'entraînement de telle façon qu'un champ magnétique de partie primaire se forme, de sorte qu'un mouvement de l'au moins une partie secondaire (20a, 20b, 20c...) le long de l'au moins une partie primaire (10, 101, 102) peut être obtenu,
dans lequel un bobinage de partie secondaire (22a, 22b, 22c) respectif dans un circuit de branchement, dans lequel une propriété caractéristique du bobinage de partie secondaire ou du circuit de branchement est significative de la partie secondaire respective, dans lequel un axe de bobinage du bobinage de partie secondaire (22a, 22b, 22c...) est prévu dans un axe d prédéfini par la partie active magnétique (21a, 21b),
- une unité de commande (30) pour alimenter des bobines de partie primaire (11, 12, 13) sélectionnées par un courant primaire dans une ou plusieurs fréquence(s) de signal test pour induire un courant secondaire dans le bobinage de partie secondaire (22a, 22b, 22c...), et pour mesurer la propriété caractéristique à l'aide d'une réponse de courant des bobines de partie primaire (11, 12, 13) influencée par le courant secondaire, **caractérisé en ce que**
pour l'identification, les bobines de partie primaire (11, 12, 13...) sélectionnées sont alimentées par un courant primaire qui conduit à un champ magnétique alternatif en direction de l'axe de bobinage du bobinage de partie secondaire (22a, 22b, 22c...) .

9. Système basé sur un moteur linéaire (100) selon la revendication 8, dans lequel le circuit de branchement est un circuit d'absorption.

10. Système basé sur un moteur linéaire (100) selon la revendication 8, dans lequel le circuit de branchement est intégré dans un transponder RFID avec information d'identification enregistrée.

11. Système basé sur un moteur linéaire (100) selon l'une des revendications 8 à 10, dans lequel le bobinage de partie secondaire (22a, 22b) est enchâssé à l'intérieur de la partie active magnétique (21a, 21b).

12. Système basé sur un moteur linéaire (100) selon l'une des revendications 8 à 10, dans lequel le bobinage de partie secondaire (22a, 22b) est prévu décalé physiquement, en particulier sur le côté, par rapport à la partie active magnétique (21a, 21b).

13. Produit de programme informatique comprenant des commandes qui ont pour effet que le système basé sur un moteur linéaire selon l'une des revendications 8 à 12 exécute les étapes de procédé selon l'une des revendications 1 à 7.
